# DEMANDE DE BREVET EUROPEEN

(11) **EP 0 803 397 A1**
(43) Date de publication de la demande: **29.10.1997**
(21) Numéro de dépôt: 97400868.2
(22) Date de dépôt: 17.04.1997
(51) Int. Cl.: B60N 2/22

(54) **Articulation pour siège de véhicule automobile et siège muni de cette articulation**

(30) Priorité: 26.04.1996 FR 9605328
(71) Demandeur: CESA COMPAGNIE EUROPEENNE DE SIEGES POUR AUTOMOBILES, 92307 Levallois-Perret Cédex (FR)
(72) Inventeur: Amorim, David, 45290 Nogent-sur-Vernisson (FR)
(74) Mandataire: Moncheny, Michel

(57) **Abrégé**

L'articulation comprend deux flasques (22, 24) montés rotatifs l'un par rapport à l'autre, des moyens (34,36) de couplage des flasques entre eux commandés par un organe (58) monté déplaçable sur un premier flasque (22) entre des positions de verrouillage et de déverrouillage de l'articulation, et un organe de manoeuvre (62) relié à l'organe de commande (58). Des moyens de sécurité anti-déverrouillage comprennent un doigt (64) solidaire de l'organe de commande (58) coopérant avec une lumière (66) de l'organe de manoeuvre (62) munie de deux parties (66A,66B) à contours entravant et autorisant respectivement le mouvement du doigt (64) vers la position de déverrouillage de l'organe de commande (58). L'organe de manoeuvre est déplaçable suivant une course morte de déplacement relatif du doigt (64) depuis la première partie (66A) vers la seconde partie (66B) de la lumière, et une course active d'entraînement du doigt (64) par coopération avec la seconde partie (66B) de la lumière (66).

## Description

La présente invention concerne une articulation pour siège de véhicule automobile et un siège muni de cette articulation.

On connaît déjà dans l'état de la technique une articulation pour siège de véhicule automobile, du type comprenant deux flasques sensiblement parallèles, mobile et fixe, montés rotatifs l'un par rapport à l'autre autour d'un axe d'articulation qui leur est sensiblement perpendiculaire, des moyens de couplage des flasques entre eux commandés par un organe monté déplaçable sur un premier flasque entre des positions de verrouillage et de déverrouillage de l'articulation, et un organe de manoeuvre relié à l'organe de commande.

Une articulation de ce type est décrite par exemple dans EP-A-0 121 452.

L'articulation décrite dans ce document relie entre eux le dossier et l'assise du siège de manière à permettre le basculement du dossier par rapport à l'assise autour d'un axe d'articulation sensiblement transversal au siège.

On exige de plus en plus fréquemment d'une articulation de siège de pouvoir résister efficacement à des chocs violents subis par le véhicule.

En particulier, dans le cas d'un siège arrière de véhicule, le dossier peut être utilisé pour séparer le coffre à bagages du véhicule de l'habitacle de ce véhicule. L'articulation reliant le dossier à l'assise doit donc pouvoir résister aux efforts importants transmis par les bagages en cas de choc.

Dans ce but, on a envisagé, d'une part, de renforcer les différentes pièces d'une articulation afin d'en augmenter la solidité, et d'autre part, d'empêcher tout risque de réversibilité de l'articulation pouvant entraîner un déverrouillage accidentel de cette dernière en cas de choc violent.

L'invention a pour but de proposer une articulation verrouillable de façon irréversible notamment en cas de choc violent subi par cette articulation.

A cet effet, l'invention a pour objet une articulation pour siège de véhicule automobile, du type précité, caractérisée en ce qu'elle comprend des moyens de sécurité anti-déverrouillage comportant un doigt solidaire de l'organe de commande coopérant avec une lumière, ménagée dans l'organe de manoeuvre, munie de première et seconde parties délimitées respectivement par des contours entravant et autorisant le mouvement du doigt vers la position de déverrouillage de l'organe de commande, l'organe de manoeuvre étant monté déplaçable sur le premier flasque suivant un trajet comprenant une course morte de déplacement relatif du doigt depuis la première partie vers la seconde partie de la lumière, et une course active d'entraînement du doigt par coopération avec la seconde partie de la lumière formant guide.

Suivant d'autres caractéristiques de cette articulation :
- l'organe de commande est monté flottant sur le premier flasque en étant déplaçable suivant un mouvement combiné en translation et en rotation ;
- le premier flasque est le flasque mobile ;
- l'organe de manoeuvre est rappelé élastiquement vers la position de verrouillage de l'organe de commande;
- l'organe de manoeuvre forme un levier de manoeuvre articulé sur le premier flasque autour d'un axe sensiblement perpendiculaire aux flasques ;
- la lumière est ménagée dans un premier bras du levier de manoeuvre et a une forme générale en L, les deux parties de la lumière formant respectivement deux branches sensiblement perpendiculaires entre elles du L, la seconde partie de la lumière s'étendant sensiblement radialement vers l'axe d'articulation du levier de manoeuvre, et un second bras du levier de manoeuvre est relié au premier flasque par un ressort de rappel sollicitant ce levier vers la position de verrouillage de l'organe de commande;
- l'organe de manoeuvre est relié à une poignée de manoeuvre par des moyens à câble ;
- les moyens de couplage comprennent des dentures complémentaires mobile et fixe portées respectivement par les flasques mobile et fixe.

L'invention a également pour objet un siège pour véhicule automobile muni d'une articulation telle que définie ci-dessus, caractérisé en ce que l'articulation relie un dossier à une assise de ce siège de manière à permettre le basculement du dossier par rapport à l'assise, l'axe de l'articulation étant sensiblement transversal au siège.

Suivant une autre caractéristique de ce siège, ce dernier forme un siège arrière du véhicule, le dossier de ce siège séparant un coffre du véhicule de l'habitacle de ce véhicule.

L'invention sera mieux comprise à la lecture de la description qui va suivre donnée uniquement à titre d'exemple et faite en se référant aux dessins annexés dans lesquels :
- la figure 1 est une vue en perspective d'une paire de sièges arrière, selon l'invention, agencés dans un véhicule automobile ;
- la figure 2 est une vue en élévation d'une articulation selon l'invention reliant le dossier à l'assise de l'un ou l'autre des sièges représentés à la figure 1 ;
- la figure 3 est une vue en perspective éclatée de l'articulation représentée à la figure 2 ;
- les figures 4 à 6 sont des vues partielles de l'articulation représentée à la figure 2 dans différentes configuration de fonctionnement de cette articulation.

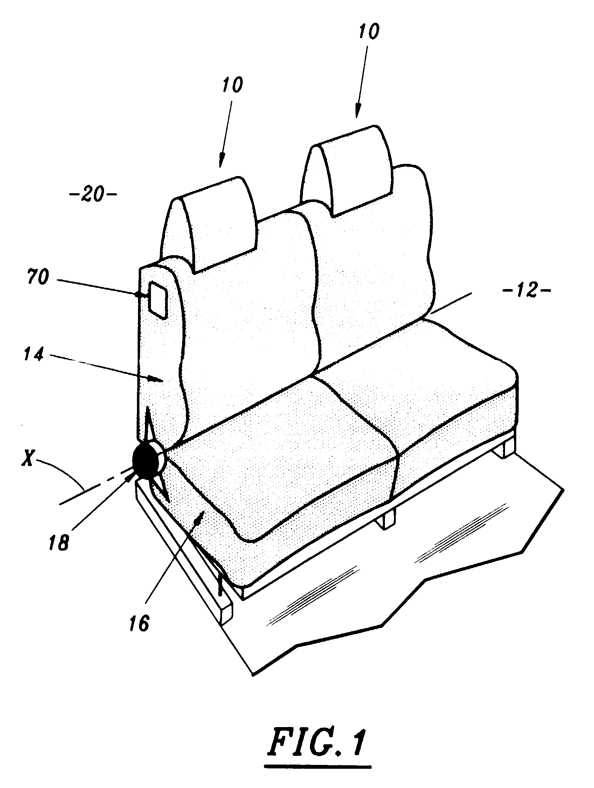

On a représenté sur la figure 1 une paire de sièges arrière 10 similaires, selon l'invention, agencés dans l'habitacle 12 d'un véhicule automobile.

Dans ce qui suit, on ne fera référence qu'à un seul des sièges 10 de la figure 1.

Le siège 10 comporte un dossier 14 relié à une assise 16 par au moins une articulation 18 selon l'invention.

Le dossier 14 sépare un coffre 20 du véhicule de l'habitacle 12.

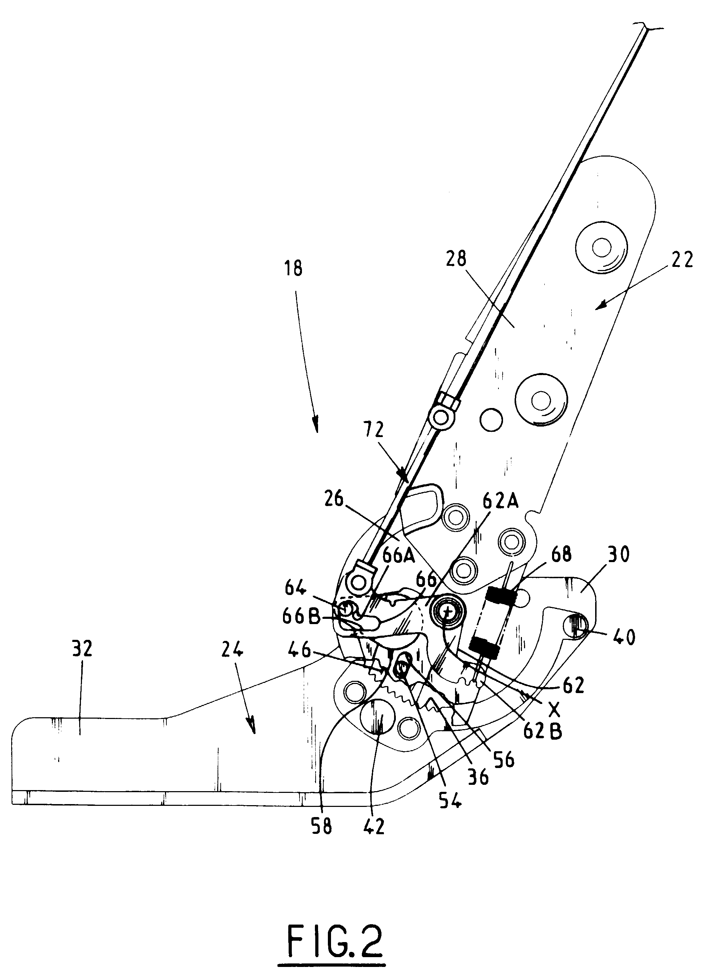

L'articulation 18, qui est illustrée plus en détail aux figures 2 à 6, permet le basculement du dossier 14 par rapport à l'assise 16 autour d'un axe d'articulation X sensiblement transversal au siège 10.

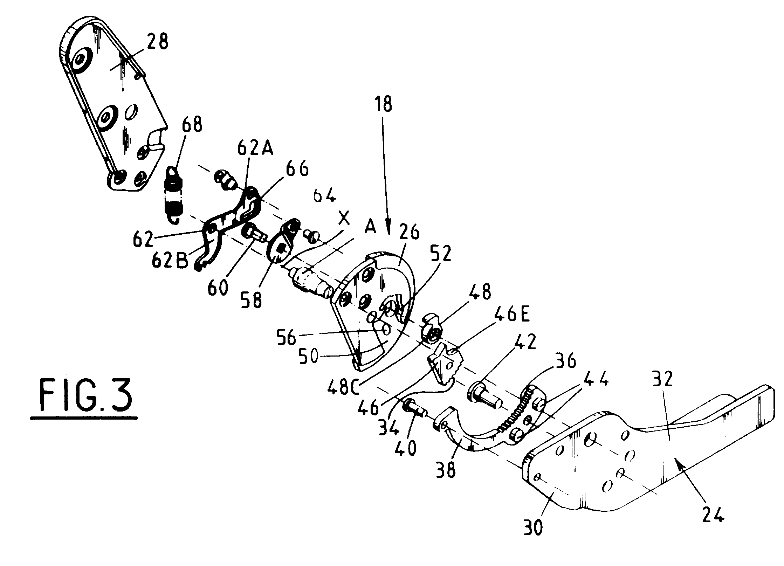

En se référant notamment aux figures 2 et 3, on voit que l'articulation 18 comporte deux flasques 22,24, sensiblement parallèles, l'un, mobile, étant fixé sur le dossier 14, et l'autre, fixe, étant fixé sur l'assise 16.

Les flasques 22,24 sont montés rotatifs l'un par rapport à l'autre autour de l'axe d'articulation X qui leur est sensiblement perpendiculaire.

Le flasque mobile 22 comporte deux parties fixées l'une sur l'autre de façon connue en soi, formant l'une, une platine 26 de forme générale circulaire, et l'autre, une plaque 28 de liaison avec une armature classique du dossier 14.

Le flasque fixe 24 comporte une première extrémité formant platine 30 et une seconde extrémité 32 de liaison avec une armature classique de l'assise 16.

L'axe d'articulation X est matérialisé par une broche A reliant les deux platines mobile 26 et fixe 30.

L'articulation 18 comprend des moyens de couplage des flasques entre eux comprenant des dentures complémentaires mobile 34 et fixe 36 portées respectivement par les flasques mobile 22 et fixe 24.

La denture fixe 36 est ménagée sur le contour intérieur d'une ferrure 38, en forme générale d'arc, fixée sur la platine fixe 30 au moyen, par exemple, de rivets 40,42 et de tétons 44.

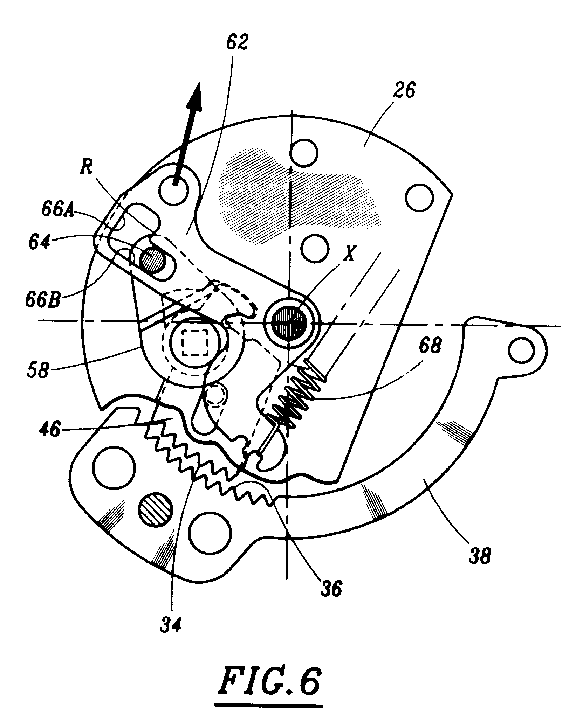

La denture mobile 34 est ménagée sur un coulisseau 46, formant grain, monté déplaçable sensiblement en translation sur la platine mobile 26 entre une position de verrouillage de l'articulation, dans laquelle il est prise avec la denture fixe, comme cela est représenté sur les figures 2,4 et 5, et une position de déverrouillage de l'articulation, dans laquelle il est écarté à peu près radialement de cette denture fixe 36, comme cela est représenté sur la figure 6.

La denture fixe 36 s'étend suivant un secteur angulaire plus grand que la denture mobile 34, de manière à permettre l'établissement de plusieurs positions de réglage de l'inclinaison du dossier 14 par rapport à l'assise 16.

Le grain 46 est déplacé au moyen d'une came de manoeuvre 48, en forme générale de botte, montée flottante sur la platine mobile 26 en étant déplaçable suivant un mouvement combiné en translation et en rotation.

Le mouvement de la came de manoeuvre 48 est transmis au grain mobile 46 par emboîtement partiel d'une extrémité 48C sensiblement circulaire de la came avec une échancrure 46E du grain, de forme générale complémentaire.

Le grain 46 et la came de commande 48 sont logés dans un enfoncement 50 de la platine mobile 26 délimité par un contour 52 de guidage du grain et de la came de commande. Le logement délimité par l'enfoncement 50 s'étend à l'intérieur de l'articulation, entre les deux platines fixe et mobile.

Un téton 54, solidaire du grain 46, monté coulissant dans une boutonnière 56 ménagée dans la platine mobile 26, participe également au guidage de ce grain 46.

On notera que le mouvement combiné en translation et en rotation de la came de commande 48 est imposé par le fait que le contour de cette came s'appuie, d'une part, sur le contour de guidage 52 de la platine mobile, et d'autre part, sur l'échancrure 46E du grain.

Le fonctionnement de la came de commande flottante 48 est décrit, par exemple, dans EP-A-0 121 452 et FR-A-95 05 425 auxquels ont pourra se référer pour plus de détails.

Le mouvement de la came de commande 48 est renvoyé à l'extérieur de l'articulation au moyen d'un levier de renvoi 58 couplé avec cette came 48 par une broche 60 de section sensiblement carrée.

Le levier de renvoi 58 forme donc un organe de commande monté flottant sur la platine mobile 26 en étant déplaçable suivant un mouvement combiné en translation et en rotation.

Le levier de renvoi 58 est déplaçable entre des positions de verrouillage et de déverrouillage de l'articulation 18, conjointement avec la came de commande 48, au moyen d'un organe de manoeuvre formant levier 62.

Ce levier de manoeuvre 62 est articulé sur la platine mobile 26 autour d'un axe sensiblement perpendiculaire aux flasques 22,24, coïncidant par exemple avec l'axe X de l'articulation.

L'articulation 18 selon l'invention comprend des moyens de sécurité anti-déverrouillage comprenant un doigt 64, solidaire d'une extrémité libre du levier de renvoi 58, coopérant avec une lumière 66 ménagée dans un premier bras 62A du levier manoeuvre 62.

La lumière 66 a une forme générale en L et est munie de deux parties 66A,66B formant respectivement deux branches sensiblement perpendiculaires entre elles du L.

La première partie 66A est délimitée par un contour entravant le mouvement du doigt 64 vers la position de déverrouillage de l'articulation du levier de renvoi 58. La seconde partie 66B est délimitée par un contour autorisant le mouvement du doigt 64 vers la position de déverrouillage de l'articulation du levier de renvoi 58.

On notera que la seconde partie 66B de la lumière s'étend sensiblement radialement vers l'axe d'articulation X du levier de manoeuvre 62.

Le levier de manoeuvre 62 peut pivoter autour de l'axe X suivant un trajet comprenant une course morte de déplacement relatif du doigt 64 depuis la première partie 66A de la lumière vers la seconde partie 66B de cette lumière, suivie d'une course active d'entraînement du doigt 64 vers la position de déverrouillage de l'articulation par coopération avec la seconde partie 66B de la lumière formant guide.

On notera que pendant la course morte du levier de manoeuvre 62, le doigt 64 est immobile par rapport à la platine mobile 26.

On notera également que la course morte du levier de manoeuvre 62 permet de tenir compte des jeux et tolérances de fabrication des éléments de l'articulation 18, notamment de la came de commande 48.

Le second bras 62B du levier de manoeuvre 62 est relié au flasque mobile 22 par un ressort de rappel 68 sollicitant élastiquement ce levier de manoeuvre 62 vers la position de verrouillage du levier de renvoi 58.

De préférence, le levier de manoeuvre 62 est actionné au moyen d'une poignée de manoeuvre 70, portée par le dossier 14. Des moyens classiques à câble 72 relient le levier de manoeuvre 62 à la poignée 70.

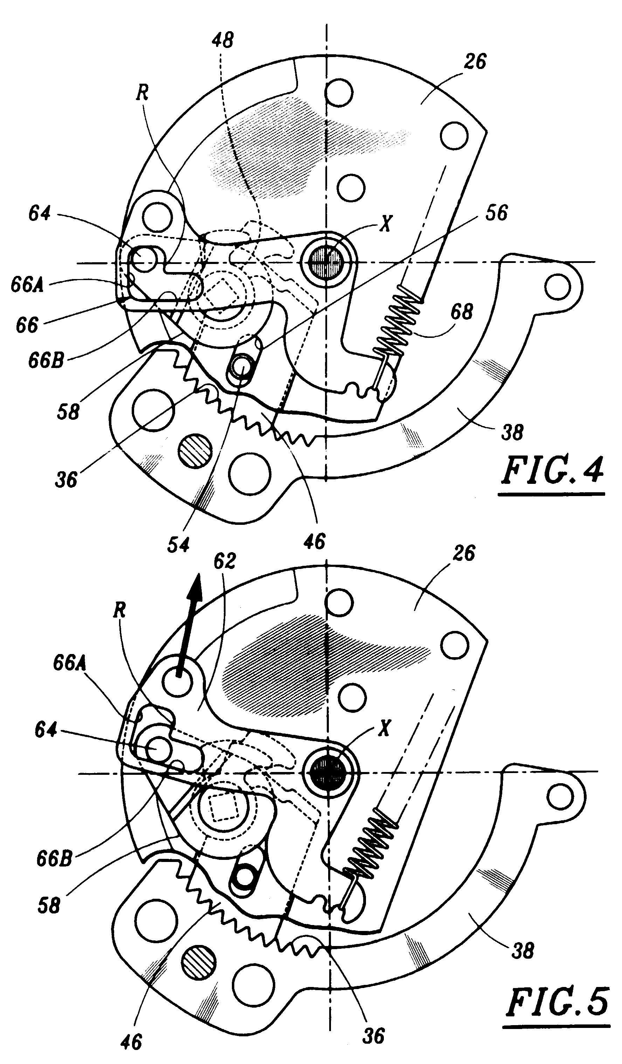

On décrira ci-dessous le fonctionnement de l'articulation 18 selon l'invention en se référant aux figures 4 à 6.

Initialement, les leviers de manoeuvre 62 et de renvoi 58 sont en position de verrouillage de l'articulation, comme cela est représenté sur la figure 4. Le doigt 64 est logé dans la première partie 66A de la lumière. Le grain 46 est en prise avec la denture fixe 36.

En cas de choc violent exercé sur l'articulation 18 ayant tendance à déplacer le grain à l'écart de la denture fixe, le doigt 64 a tendance à se déplacer vers la position de déverrouillage de l'articulation sous l'effet du mouvement que lui transmet le grain 46 par l'intermédiaire de la came de commande 48.

Cependant, le mouvement du doigt 64 vers la position de déverrouillage est entravé par le contour de la première partie 66A de la lumière.

On notera que le contour de la première partie 66A de la lumière présente une rampe R inclinée par rapport à l'axe d'articulation du levier de manoeuvre 62 de manière à immobiliser le doigt 64 dans cette première partie 66A d'autant plus fermement que l'effort exercé par le doigt 64 sur cette rampe est important.

Ainsi, l'articulation 18 reste en position verrouillée même lorsqu'elle est soumise à des efforts importants.

Pour déverrouiller l'articulation 18, on actionne la poignée de manoeuvre 70, ce qui a pour effet, par l'intermédiaire des moyens à câble 72, de faire tourner le levier de manoeuvre 62 vers le haut, suivant la direction de la flèche illustrée sur les figures 5 et 6.

Le levier de manoeuvre 26 parcourt alors une course morte circulaire provoquant le déplacement relatif du doigt 64 depuis la première partie 66A de la lumière vers la seconde partie 66B de cette lumière, comme cela est représenté sur la figure 5.

La course morte est suivie d'une course active circulaire du levier de manoeuvre 62 au cours de laquelle le doigt 64 coopère avec la seconde partie 66B de la lumière, par effet de rampe, de manière à entraîner le levier de renvoi 58 et le grain denté 46 vers leur position de déverrouillage, comme cela est représenté sur la figure 6.

Lorsque l'on relâche la poignée de manoeuvre 70, le levier de manoeuvre 62, le levier de renvoi 58 et le grain denté 46 sont rappelés élastiquement vers les positions représentées à la figure 4 par le ressort de rappel 68.

On notera que le levier de commande 58 est ramené vers sa position de verrouillage par coopération du contour de la première partie 66A de la lumière avec le doigt 64.

L'invention ne se limite pas au mode de réalisation illustré sur les figures.

En particulier, la lumière des moyens de sécurité anti-déverrouillage peut être ménagée dans un organe de manoeuvre déplaçable en translation et non pas en rotation comme le levier de manoeuvre 62 précédemment décrit.

Par ailleurs, le levier de commande n'est pas nécessairement monté flottant sur un des flasques mais peut être également articulé autour d'un axe fixe sur ce flasque.

## Revendications

1. Articulation pour siège de véhicule automobile, du type comprenant deux flasques sensiblement parallèles, mobile (22) et fixe (24), montés rotatifs l'un par rapport à l'autre autour d'un axe d'articulation (X) qui leur est sensiblement perpendiculaire, des moyens (34,36) de couplage des flasques (22,24) entre eux commandés par un organe (58) monté déplaçable sur un premier flasque (22) entre des positions de verrouillage et de déverrouillage de l'articulation, et un organe de manoeuvre (62) relié à l'organe de commande (58), caractérisée en ce qu'elle comprend des moyens de sécurité anti-déverrouillage comportant un doigt (64) solidaire de l'organe de commande (58) coopérant avec une lumière (66), ménagée dans l'organe de manoeuvre (62), munie de première (66A) et seconde (66B) parties délimitées respectivement par des contours entravant et autorisant le mouvement du doigt (64) vers la position de déverrouillage de l'organe de commande (58), l'organe de manoeuvre étant monté déplaçable sur le premier flasque (22) suivant un trajet comprenant une course morte de déplacement relatif du doigt (64) depuis la première partie (66A) vers la seconde partie (66B) de la lumière, et une course active d'entraînement du doigt (64) par coopération avec la seconde partie (66B) de la lumière formant guide.

2. Articulation selon la revendication 1, caractérisée en ce que l'organe de commande (58) est monté flottant sur le premier flasque (22) en étant déplaçable suivant un mouvement combiné en translation et en rotation.

3. Articulation selon la revendication 1 ou 2, caractérisée en ce que le premier flasque est le flasque mobile (22).

4. Articulation selon l'une quelconque des revendications précédentes, caractérisée en ce que l'organe de manoeuvre (62) est rappelé élastiquement vers la position de verrouillage de l'organe de commande (58).

5. Articulation selon l'une quelconque des revendications précédentes, caractérisée en ce que l'organe de manoeuvre (62) forme un levier de manoeuvre articulé sur le premier flasque (22) autour d'un axe sensiblement perpendiculaire aux flasques (22,24).

6. Articulation selon les revendications 4 et 5 prises ensemble, caractérisée en ce que la lumière (66) est ménagée dans un premier bras (62A) du levier de manoeuvre et a une forme générale en L, les deux parties (66A,66B) de la lumière formant respectivement deux branches sensiblement perpendiculaires entre elles du L, la seconde partie (66B) de la lumière s'étendant sensiblement radialement vers l'axe d'articulation (X) du levier de manoeuvre (62), et en ce qu'un second bras (62B) du levier de manoeuvre est relié au premier flasque (22) par un ressort de rappel (68) sollicitant ce levier (62) vers la position de verrouillage de l'organe de commande (58).

7. Articulation selon l'une quelconque des revendications précédentes, caractérisée en ce que l'organe de manoeuvre (62) est relié à une poignée de manoeuvre (70) par des moyens à câble (72).

8. Articulation selon l'une quelconque des revendications précédentes, caractérisée en ce que les moyens de couplage comprennent des dentures complémentaires mobile (34) et fixe (36) portées respectivement par les flasques mobile (22) et fixe (24).

9. Siège pour véhicule automobile muni d'une articulation (18) selon l'une quelconque des revendications précédentes, caractérisé en ce que l'articulation (18) relie un dossier (14) à une assise (16) de ce siège de manière à permettre le basculement du dossier par rapport à l'assise, l'axe (X) de l'articulation étant sensiblement transversal au siège.

10. Siège selon la revendication 9, caractérisé en ce qu'il forme un siège arrière du véhicule, le dossier (14) de ce siège séparant un coffre (20) du véhicule de l'habitacle (12) de ce véhicule.
